# FASCICULE DE BREVET EUROPEEN

(11) **EP 3 687 845 B1**
(45) Date de publication et mention de la délivrance du brevet: **15.01.2025**
(21) Numéro de dépôt: 18808412.3
(22) Date de dépôt: 28.09.2018
(51) Int. Cl.: B60J 7/02, B60J 7/04, B60J 7/043, B60J 1/00

(54) **PANNEAU VITRE A POURTOUR POLYMERIQUE, ARMATURES DE RENFORT ET ARMATURES DE FIXATION**
GLASPANEEL MIT POLYMERISCHEM RAND, VERSTÄRKUNGSRAHMEN UND BEFESTIGUNGSRAHMEN
GLASS PANEL WITH POLYMERIC EDGE, REINFORCEMENT FRAMES AND FASTENING FRAMES

(30) Priorité: 29.09.2017 FR 1759079
(43) Date de publication de la demande: 05.08.2020
(73) Titulaire: SAINT-GOBAIN GLASS FRANCE, 92400 Courbevoie (FR)
(72) Inventeur: KLEO, Christophe, 60350 Attichy (FR); ZHAO, Li, 60200 Compiegne (FR)
(74) Mandataire: Saint-Gobain Recherche
(86) Numéro de dépôt international: PCT/FR2018/052398
(87) Numéro de publication internationale: WO 2019/063954

(56) Documents cités:
- EP-A2- 2 700 521
- WO-A1-2017/152980

## Description

La présente invention concerne un panneau vitré à pourtour polymérique, armatures de renfort et armatures de fixation notamment pour toit de véhicule automobile.

Les pavillons ou toits des véhicules automobiles sont soumis à une dépression en raison de l'aérodynamisme du véhicule laquelle augmente avec la vitesse de déplacement du véhicule. Il en résulte des efforts mécaniques sollicitant le toit vers le haut : ce phénomène est habituellement dénommé effet *windload.* Lorsque les pavillons sont équipés d'un panneau vitré, celui-ci est soumis à ces efforts sollicitant le panneau vitré notamment en flexion et doit donc être apte à y résister.

Lorsqu'il est monté fixe dans le pavillon, le panneau vitré est protégé contre une déformation excessive de par sa fixation à la carrosserie du véhicule.

Dans le cas d'un panneau vitré de pavillon associé à un mécanisme de translation pour former un ouvrant, le panneau de verre - traditionnellement un verre monolithique trempé de 3 à 5 mm d'épaisseur - est renforcé contre les déformations en flexion engendré par l'effet *windload* au moyen d'une armature métallique longitudinale solidarisée au panneau verre le long du bord avant du panneau et une autre le long du bord arrière du panneau vitré. Par ailleurs, deux autres armatures métalliques longitudinales sont solidarisées le long des bords latéraux sur le panneau de verre et permettent de fixer le panneau vitré par le biais du mécanisme de translation dans une ouverture correspondante ménagée dans le pavillon du véhicule automobile. Le panneau de verre est en outre pourvu sur sa périphérie d'un matériau polymérique, habituellement du polyuréthane. Les armatures de renfort sont habituellement complètement encapsulées dans le matériau polymérique et les armatures de fixation partiellement, ceci pour les solidariser au panneau de verre.

Du fait du risque de casse en petits morceaux de ce type de panneau vitré en cas de choc et des inconvénients en résultant, il est de plus en plus recouru à des verres feuilletés éventuellement renforcés par des traitements thermiques ou chimiques. Cependant, ces derniers sont plus souples que les verres monolithiques, notamment du fait de leur feuille intercalaire en matière plastique. De surcroît, la tendance actuelle est d'alléger le toit en diminuant les épaisseurs des feuilles de verre constitutives du verre feuilleté, ce qui accroît encore davantage la souplesse du panneau de verre.

Il en résulte un risque de déformation du panneau de verre en raison de l'effet *windload* qui peut conduire à des défauts d'étanchéité, voire de casse du verre si sa déflection dépasse sa limite de résistance à la rupture. Par ailleurs, les panneaux vitrés doivent résister à des tests de résistance mécanique consistant à les suspendre par les coins en les chargeant au centre. Or, l'invention a permis d'identifier un risque accru de casse dans la région des coins du panneau de verre.

Selon un premier aspect, la présente invention a pour but de pallier cet inconvénient. A cette fin, l'invention propose de lier deux à deux les deux armatures de renfort et les deux armatures de fixation par leurs extrémités longitudinales pour former un cadre. De la sorte, le panneau de verre est supporté à l'avant et à l'arrière sur toute sa partie transversale jusqu'aux armatures de fixation sans interruption, contrairement à l'art antérieur laissant subsister généralement un espace de 1 à 10 mm entre elles, parfois plus. De ce fait, les concentrations de contrainte dans les coins du panneau de verre sont réduites, ce qui permet de réduire, voire exclure le risque de casse lié à l'effet *windload* ou lors des tests précités de résistance mécanique sous charge.

Il pourrait être envisagé de réaliser les armatures de renfort et les armatures de fixation sous forme de cadre par moulage, par formage ou par soudage. Cependant, ces solutions ont toutes pour inconvénient d'être onéreuses. Ainsi, la réalisation du cadre par moulage implique le recours à un moule de grande dimension, ce qui est onéreux, mais aussi à un matériau de moulage performant, et donc onéreux également, du point de vue de la résistance mécanique et de la tenue en température (eu égard aux températures auxquelles le panneau vitré peut être exposé dans son application finale). De plus, la réalisation des armatures de fixation en matériau plastique et composite pose problème en termes de résistance mécanique au niveau de leurs ouvertures de fixation dont elles sont pourvues. La réalisation sous forme de cadre par formage d'une pièce métallique implique non seulement de nombreuses opérations, notamment des pliages et des découpes pour structurer les armatures de fixation, mais conduit aussi à une perte importante de matière du fait que la structure des armatures de fixation est plus légère par rapport à celle des armatures de renfort car les premières n'exercent pas de fonction de renfort du panneau de verre ou du moins qu'accessoirement. Similairement, l'assemblage des armatures de renfort et des armatures de fixation entre elles par soudage est également complexe et onéreux.

A la différence de ces approches, il est connu de EP 2 700 521 A2 un ouvrant de pavillon de véhicule automobile dans lequel quatre armatures métalliques de renfort distinctes sont solidarisées sur la face intérieure du panneau de verre de l'ouvrant, une à l'avant du panneau de verre, une autre à l'arrière et deux autres sur un côté latéral respectivement du panneau de verre. Les armatures latérales servent aussi à la fixation de l'ouvrant à un mécanisme de translation. L'armature avant est fixée au panneau de verre par un joint en caoutchouc ou similaire agencé sur le bord avant du panneau de verre tandis que les armatures latérales et l'armature arrière sont fixées sur le panneau de verre par un adhésif. Les quatre armatures sont disposées sur le panneau de verre en étant jointes deux à deux par leurs extrémités à chaque fois par le biais d'une pièce intermédiaire respective en plastique, et forment ainsi un cadre sur le panneau de verre. Les pièces intermédiaires en plastique sont aussi fixées au panneau de verre par un adhésif ou similaire.

Chaque pièce intermédiaire présente un tronçon qui est inséré dans l'extrémité d'une armature avant ou arrière, l'insertion se faisant suivant la direction longitudinale de l'armature avant ou arrière concernée. Au contraire, les armatures latérales présentent une section transversale ouverte en forme de U de sorte que l'extrémité de l'armature latérale est engageable libre de maintien sur un tronçon correspondant de la pièce intermédiaire suivant une direction perpendiculaire à la direction longitudinale de l'armature latérale. De ce fait, les armatures sont fixées sur le panneau de verre les unes après les autres. Cette solution reste complexe et fastidieuse du point de vue de la mise en place des armatures sur le panneau de verre aux fins de solidarisation sur ce dernier.

WO 2017/152980 A1 décrit aussi un ouvrant de pavillon de véhicule automobile dont le panneau de verre est renforcé. Il propose notamment de réaliser une armature de renfort avant et une armature de renfort arrière en matière plastique renforcée par des fibres et deux armatures latérales réalisées selon le cas en métal ou aussi en matière plastique renforcée par des fibres. Les armatures sont selon le cas fixées au panneau de verre par collage et/ou encapsulation de manière à former entre elles un cadre. Il ressort du document que la mise en place des armatures relativement au panneau de verre en vue de leur solidarisation est aussi faite successivement, ce qui a pour inconvénient que cette solution, similairement au document précédent, est complexe et fastidieuse du point de vue de la mise en place des armatures sur le panneau de verre aux fins de solidarisation sur ce dernier.

Afin de pallier au moins partiellement ces inconvénients, l'invention selon son premier aspect propose un cadre selon la revendication 1, destiné à être solidarisé à un panneau de verre, comprenant :
- deux armatures longitudinales de renfort pour renforcer le panneau de verre contre les déformations par flexion ; et
- deux armatures longitudinales de fixation pour fixer le panneau vitré dans une structure extérieure prévue pour recevoir le panneau vitré ;
dans lequel :
- les deux armatures de renfort et les deux armatures de fixation sont unies deux à deux par leurs extrémités longitudinales pour former le cadre, et
- au moins une ou chacune des extrémités longitudinales de l'une ou chacune des armatures de renfort est unie à l'extrémité longitudinale correspondante de l'armature de fixation adjacente au moyen d'un assemblage à emboitement.

Le fait d'unir les armatures de renfort et les armatures de fixation sous la forme d'un cadre préalablement à leur solidarisation au panneau de verre du panneau vitré - et donc indépendamment de celui-ci - simplifie leur mise en place sur le panneau de verre aux fins de solidarisation car il n'y a plus qu'un seul élément à manipuler et placer sur le panneau de verre ou par rapport à celui-ci, à savoir le cadre, au lieu des quatre armatures individuellement et éventuellement aussi les pièces intermédiaires de liaison. Il en résulte un gain de temps de fabrication, peu importe que la solidarisation soit réalisée par surmoulage et/ou collage.

Le fait de recourir à un assemblage à emboitement permet d'unir l'armature de renfort et l'armature de fixation de manière simple, rapide et économique. En plus de l'emboitement, l'assemblage peut optionnellement être complété par exemple par un collage ou par un encliquetage élastique de l'extrémité de l'une des armatures dans celle de l'autre ou dans la pièce intermédiaire de liaison, ce qui permet d'assurer ou compléter le maintien en position relatif des deux pièces. Si leur matériau le permet, il peut aussi s'agir d'un ou plusieurs points de soudure solidarisant les deux pièces emboitées, l'emboitement simplifiant dans ce cas l'opération de soudage. Cependant, il est particulièrement avantageux que l'assemblage soit réalisé exclusivement par emboitement car cette solution est particulièrement simple, rapide et économique. Dans ce cas, il est avantageux que l'emboitement se fasse avec un ajustement serré. Le niveau de serrage est de préférence choisi approprié pour permettre un emboitement manuel tout en fournissant un maintien en position relatif des pièces concernées qui permette la manipulation subséquente du cadre résultant sans désengagement mutuel.

Il est avantageux de mettre en oeuvre ce mode d'assemblage à chacune des extrémités des deux armatures de renfort. Cela permet de concevoir et fabriquer les armatures de renfort et les armatures de fixation de façon indépendante : elles peuvent ainsi présenter leurs caractéristiques propres adaptées à leurs fonctions respectives tout en facilitant leur fabrication respective. Cela permet ensuite de les assembler sous forme de cadre de manière simple, rapide et économique. En particulier, cela évite les inconvénients précités des solutions de moulage, de formage ou de soudage. En plus, il est possible de recourir à des matériaux différents pour les armatures de renfort et les armatures de fixation, par exemple un matériau composite pour les armatures de renfort et un matériau métallique pour les armatures de fixation.

S'agissant d'un ouvrant de pavillon de véhicule automobile, l'invention suivant ce premier aspect est particulièrement adapté au cas des panneaux vitrés dont le panneau de verre est en verre feuilleté, notamment bifeuilleté, et a une surface supérieure ou égale à 0,4 m² car ils sont plus exposés au risque de casse dans les coins que pour des panneaux plus petits.

Suivant des modes de réalisation préférés, ce cadre selon ce premier aspect de l'invention comprend une ou plusieurs des caractéristiques suivantes :
- ledit assemblage est réalisé par emboitement à ajustement serré ;
- au moins une ou chacune des extrémités longitudinales de l'une ou chacune des armatures de renfort est unie à l'extrémité longitudinale correspondante de l'armature de fixation adjacente exclusivement au moyen d'un assemblage à emboitement à ajustement serré ;
- ledit assemblage à emboitement comprend un premier emboitement entre l'extrémité longitudinale de l'armature de renfort et une pièce intermédiaire de liaison et un deuxième emboitement entre l'extrémité longitudinale de l'armature de fixation et ladite pièce intermédiaire de liaison ;
- le premier emboitement et le deuxième emboitement sont chacun à ajustement serré ;
- ledit assemblage comprend un emboitement de l'extrémité longitudinale de l'armature de renfort et un emboitement de l'extrémité longitudinale de l'armature de fixation dans une même pièce intermédiaire de liaison ;
- la distance séparant l'extrémité longitudinale de l'armature de renfort et l'extrémité longitudinale de l'armature de fixation qui sont emboitées dans une même pièce intermédiaire de liaison, est inférieure à 30 mm, de préférence inférieure à 20 mm, plus préférentiellement inférieure à 10 mm et plus préférentiellement inférieur à 5 mm ;
- ledit assemblage comprend un emboitement de l'extrémité longitudinale de l'armature de renfort et de l'extrémité longitudinale de l'armature de fixation directement l'une dans l'autre ;
- l'extrémité longitudinale de l'armature de fixation présente une partie coudée tournée vers l'extrémité longitudinale adjacente de l'armature de renfort, dans lequel la partie coudée sert à l'assemblage par emboitement ;
- une ou chacune des armatures de renfort est réalisée en un matériau métallique ;
- au moins une des armatures de renfort est en matériau composite et est réalisée sous forme d'une pièce profilée renforcée par des nervures longitudinales et/ou des nervures transversales ;
- les armatures de fixation sont réalisées en matériau métallique ;
- les deux armatures de renfort et les deux armatures de fixation sont unies deux à deux par leurs extrémités longitudinales de manière à assurer un maintien suffisant entre elles pour pouvoir manipuler le cadre sans désassemblage avant solidarisation au panneau de verre ;
- les armatures de fixation ont un effet négligeable par rapport aux armatures de renfort du point de vue de la rigidification du panneau vitré.

Toujours selon ce premier aspect, l'invention propose aussi un panneau vitré, comprenant :
- un panneau de verre présentant :
   - une première et une deuxième faces principales, et
   - un pourtour définissant pour le panneau de verre un bord avant, un bord arrière et un premier et un deuxième bord latéral s'étendant chacun entre le bord avant et le bord arrière ;
- un matériau polymérique périphérique agencé sur le pourtour du panneau de verre ; et
- un cadre selon le premier aspect de l'invention mentionné plus haut, qui est solidarisé à la première face principale du panneau de verre ;
dans lequel :
- chacune des armatures de renfort du cadre est solidarisée sur la première face principale du panneau de verre, la première dans une région le long du bord avant et la deuxième dans une région le long du bord arrière ; et
- chacune des armatures de fixation du cadre est solidarisée sur la première face principale du panneau de verre, la première dans une région le long du premier bord latéral et la deuxième dans une région le long du deuxième bord latéral.

Suivant des modes de réalisation préférés, le panneau vitré comprend une ou plusieurs des caractéristiques suivantes :
- les armatures de renfort, et le cas échéant les pièces intermédiaires de liaison, sont complètement encapsulées dans le matériau polymérique périphérique et les armatures de fixation sont partiellement surmoulées par le matériau polymérique périphérique ;
- les armatures de renfort et les armatures de fixation sont situées complètement en-dehors du matériau polymérique périphérique ;
- l'une ou chacune des armatures de renfort comprend une face positionnée en regard du panneau de verre laquelle face forme une surface de sensiblement pleine et continue sur toute la longueur de l'armature de renfort ;
- au moins l'une des armatures de renfort est une pièce profilée en 'I' et est placée en regard du panneau de verre avec une face définie par l'une des deux barres horizontales du 'I' ;
- l'armature de renfort sous forme de pièce profilée en 'I' est encapsulée dans le matériau polymérique périphérique, deux cavités longitudinales creuses ou remplies d'un matériau polymérique différent étant ménagées le long de l'armature de renfort, à savoir une de chaque côté du montant vertical de la section en 'I' entre les deux barres horizontales de la section en 'I' ;
- au moins l'une des armatures de renfort est une pièce profilée en 'U' et est placée en regard du panneau de verre avec une face définie par la barre horizontale de la section en 'U' qui relie entre elles les deux montants verticaux de la section en 'U' à une première de leurs extrémités, les montants verticaux du 'U' étant chacun prolongés à leurs deuxièmes extrémités par une portion horizontale orientée vers l'extérieur du 'U' ;
- au moins l'une des armatures de renfort est une pièce profilée dont la section transversale est constituée par une première et une deuxième portions chacune de section sensiblement carrée ou rectangulaire et qui sont espacées l'une de l'autre tout en étant réunies entre elles par un prolongement d'un de leur côté respectif, l'armature de renfort étant placée contre le panneau de verre avec la face définie par lesdits côtés respectifs qui sont prolongés ;
- le panneau de verre est en verre bifeuilleté et comprend une première feuille de verre ayant une épaisseur de 0,7 à 3,1 mm, plus préférentiellement de 0,7 à 2,1 mm, et une deuxième feuille de verre ayant une épaisseur de 1,4 à 3,1 mm, la première feuille de verre définissant de préférence la première face principale du panneau de verre et la deuxième feuille de verre la deuxième face principale du panneau de verre ;
- le matériau polymérique périphérique est agencé sur tout le pourtour du panneau de verre.

Selon un autre aspect, l'invention propose aussi un véhicule automobile, comprenant un panneau vitré selon le premier aspect de l'invention, lequel est monté dans le pavillon du véhicule en formant de préférence un ouvrant, les deux armatures de renfort s'étendant transversalement par rapport au véhicule automobile.

Selon un autre aspect encore, l'invention propose un procédé de fabrication d'un panneau vitré selon le premier aspect de l'invention, comprenant les étapes de :
a) formation d'un cadre à quatre côtés dont deux côtés opposés sont définis par deux armatures longitudinales de renfort et deux autres côtés opposés sont définis par deux armatures longitudinales de fixation, les extrémités longitudinales des armatures de renfort étant chacune unies à une extrémité correspondante de l'une des armatures de fixation,
b) mise en position du cadre ainsi formé et d'un panneau de verre dans un moule,
c) remplissage du moule avec un matériau polymérique pour adjoindre du matériau polymérique sur le pourtour du panneau de verre qui surmoule partiellement les armatures de fixation et encapsule les armatures de renfort,
dans lequel l'étape a) comprend le fait d'unir au moins l'une ou chacune des extrémités longitudinales de l'une ou chacune des armatures de renfort avec l'extrémité longitudinale correspondante de l'armature de fixation adjacente au moyen d'un assemblage à emboitement.

Suivant des modes de réalisation préférés, le procédé selon cet aspect de l'invention comprend une ou plusieurs des caractéristiques suivantes :
- l'étape a) comprend le fait d'unir au moins l'une ou chacune des extrémités longitudinales de l'une ou chacune des armatures de renfort avec l'extrémité longitudinale correspondante de l'armature de fixation adjacente exclusivement par emboitement à ajustement serré,
- l'étape a) comprend le fait d'emboiter l'extrémité longitudinale de l'armature de renfort et l'extrémité longitudinale correspondante de l'armature de fixation adjacente dans une même pièce intermédiaire de liaison,
- l'étape b) comprend le fait de mettre en position et maintenir en position le cadre dans le moule exclusivement par le biais des armatures de fixation.

Plus généralement, l'invention propose un procédé de fabrication d'un panneau vitré selon le premier aspect de l'invention, comprenant les étapes de :
a) fourniture ou formation d'un cadre selon le premier aspect de l'invention, puis de
b) solidarisation du cadre à une face principale du panneau de verre.

Suivant des modes de réalisation préférés, ce dernier procédé comprend une ou plusieurs des caractéristiques suivantes :
- à l'étape b), une solidarisation est réalisée entre la face principale du panneau de verre et chaque armature de renfort et entre la face principale du panneau de verre et chaque armature de fixation ;
- à l'étape b), une solidarisation est en outre réalisée entre la face principale du panneau de verre et entre chaque pièce de liaison intermédiaire ;
- l'étape b) comprend :
   ∘ b1) la mise en position du cadre et du panneau de verre dans un moule, et
   ∘ b2) le remplissage du moule avec un matériau polymérique pour adjoindre du matériau polymérique sur le pourtour du panneau de verre qui surmoule partiellement les armatures de fixation et encapsule les armatures de renfort ;
- à la sous-étape b2), les armatures de renfort et le cas échéant les pièces intermédiaires de liaison sont complètement encapsulées par le matériau polymérique ;
- la sous-étape b1) comprend la mise en position et le maintien en position du cadre dans le moule exclusivement par le biais des armatures de fixation ;
- la solidarisation des armatures de renfort et des armatures de fixation, ainsi que le cas échéant des pièces intermédiaires de liaison, sur le panneau de verre est assurée exclusivement par le matériau polymérique.

Dans le cadre de l'invention, on comprendra que le panneau de verre peut être constitué en une ou plusieurs feuilles de verre minéral, mais aussi d'une ou plusieurs feuilles de verre organique, par exemple en polycarbonate ou en polyméthacrylate de méthyle.

D'autres aspects, caractéristiques et avantages de l'invention apparaîtront à la lecture de la description qui suit de modes de réalisation préférés de l'invention, donnée à titre d'exemple et en référence au dessin annexé.
La figure 1 représente une vue schématique en perspective de dessus d'un panneau vitré pour toit de véhicule automobile selon un mode de réalisation de l'invention.
La figure 2 représente une vue schématique en coupe A-A du panneau vitré selon la figure 1.
Les figures 3 et 4 illustrent deux exemples de configuration des armatures de renfort intégrées dans le matériau polymérique en périphérie du panneau vitré des figures 1 et 2.
La figure 5 illustre l'armature de renfort de la figure 4, mais complétée par une peau qui l'entoure.
La figure 6 illustre un exemple de deux armatures de renfort et deux armatures de fixation assemblées sous forme de cadre par emboitement de leurs extrémités dans des pièces de liaison respectives avant solidarisation sur un panneau de verre.
La figure 7 illustre une région de coin d'un panneau vitré pour pavillon de véhicule automobile selon un mode de réalisation de l'invention lequel comprend le cadre de la figure 6 qui est encapsulé dans le matériau polymérique en périphérie de son panneau de verre, le matériau polymérique étant fictivement supprimé localement pour rendre visible l'assemblage de l'armature de renfort avec l'armature de fixation.
La figure 8 est identique à la figure 7, sauf en ce que la pièce de liaison entre l'armature de renfort et l'armature de fixation n'est pas représentée.
Les figures 9 et 10 montrent deux vues en perspective d'une pièce de liaison utilisée dans l'exemple de la figure 6.
Les figures 11 à 16 illustrent différents exemples de configuration des armatures de renfort.
La figure 17 est une coupe schématique au bord d'un panneau vitré pour pavillon de véhicule automobile selon un autre mode de réalisation de l'invention.
La figure 18 illustre une région de coin du panneau vitré de la figure 17.
La figure 19 est identique à la figure 18, sauf en ce que la pièce de liaison entre l'armature de renfort et l'armature de fixation n'est pas représentée.

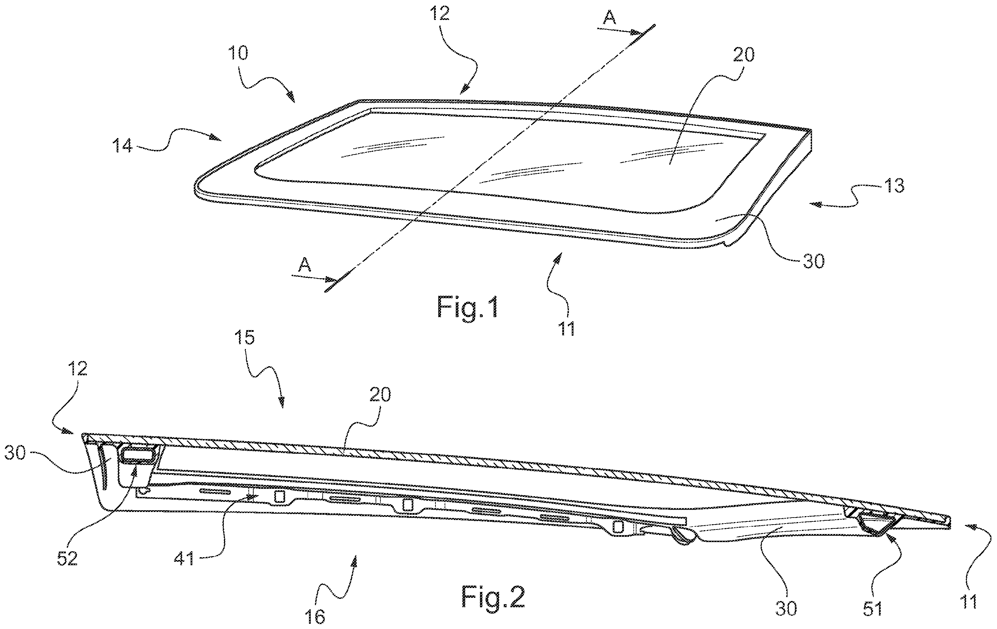

En référence aux figures 1 et 2, nous allons décrire un panneau vitré 10 selon un premier mode de réalisation. Dans cet exemple, il s'agit d'un ouvrant pour pavillon de véhicule automobile et est destiné à être monté dans une ouverture du pavillon prévue à cet effet au moyen d'un mécanisme permettant de le déplacer entre une position fermée et une position ouverte.

Le panneau vitré 10 a deux faces principales : une face supérieure 15 et une face inférieure 16 correspondant respectivement à l'extérieur du véhicule et à l'intérieur de l'habitacle du véhicule après montage dans le toit de celui-ci. Le panneau vitré 10 comprend un bord avant 11 et un bord arrière 12, ainsi que deux bords latéraux 13, 14. Les notions d'avant, arrière et latéral définissent en l'occurrence l'orientation du panneau vitré après installation dans le pavillon du véhicule automobile en correspondance avec les côtés avant, arrière et latéraux respectivement du véhicule automobile.

Le panneau vitré 10 comprend un panneau de verre 20, de préférence un verre feuilleté, et plus préférentiellement un verre bifeuilleté ayant deux feuilles de verre entre lesquelles est agencée une couche intercalaire en matériau polymérique, par exemple du polyvinylbutyral (PVB). S'agissant de l'application à un véhicule automobile, la feuille de verre extérieure a de préférence une épaisseur de 1,4 à 3,1 mm, tandis que la feuille de verre intérieure a de préférence une épaisseur de 0,7 à 3,1 mm, plus préférentiellement de 0,7 à 2,1 mm. La notion d'intérieur et d'extérieur se réfère respectivement à l'intérieur et à l'extérieur de l'habitacle du véhicule. Alternativement, il peut s'agir d'un verre monolithique.

Le panneau de verre 20 est pourvu sur toute sa périphérie d'un matériau polymérique 30. Il peut avantageusement assurer la finition de la périphérie du panneau de verre 20 et la protéger contre les chocs mécaniques. A cette fin, la tranche du panneau de verre 20 est préférentiellement entièrement recouverte par le matériau polymérique 30. Le matériau polymérique peut aussi former une surface destinée à coopérer avec un ou plusieurs joints fixés dans l'ouverture du pavillon du véhicule automobile afin d'assurer l'étanchéité entre le pavillon et le panneau vitré en position fermée. Inversement, le matériau polymérique 30 peut porter lui-même un ou plusieurs joints périphériques à cette même fin. Par ailleurs, des pièces peuvent être intégrés dans le matériau polymérique 30 telles que des butées ou tampons de coulissement, des pions de centrage, un enjoliveur, etc. Le matériau polymérique 30 est préférentiellement du polyuréthane, mais il peut s'agir de tout autre matériau approprié, notamment une matière plastique. Le matériau polymérique 30 est préférentiellement agencé sur le panneau de verre 20 par surmoulage.

Comme cela est visible sur la figure 2, le panneau vitré 10 comprend une armature de renfort 51 solidarisée au panneau de verre 20 dans la région du bord avant 11 et une autre armature de renfort 52 solidarisée au panneau de verre 20 dans la région du bord arrière 12. Les deux armatures de renfort 51 et 52 ont pour fonction de rigidifier le verre 20 pour limiter sa flexion notamment sous l'effet *windload* et ainsi favoriser le maintien de l'intégrité du panneau de verre 20 et l'étanchéité entre le panneau vitré 10 et le pavillon du véhicule automobile. Les armatures de renfort 51, 52 sont de préférence complètement encapsulées dans le matériau polymérique 30 en périphérie du panneau de verre 20.

Par ailleurs, le panneau vitré 10 comprend une armature de fixation 41 s'étendant le long de la région de bord droit du panneau vitré 10 et une autre - non visible - le long de la région de bord gauche du panneau vitré 10. Elles ont une forme longitudinale - c'est-à-dire allongée - et s'étendent sensiblement sur toute la longueur du panneau de verre 20. Elles servent à fixer le panneau vitré 10 à un mécanisme de translation d'ouvrant destiné au montage du panneau vitré 10 dans une ouverture du pavillon de véhicule automobile et permettant de déplacer le panneau vitré 10 entre une position ouverte et une position fermée. La fixation au mécanisme de translation d'ouvrant est réalisée en différents points entre le bord avant 11 et le bord arrière 12 par tout moyen approprié tels que des vis ou rivets. A cette fin, les armatures de fixation 41 présentent des ouvertures ou oeillets de fixation notamment pour le passage des vis, rivets ou autres éléments de fixation. Ces armatures de fixation 41 ne sont intégrées que partiellement dans le joint 30 pour laisser les ouvertures ou oeillets de fixation accessible. Les armatures de fixation 41 sont préférentiellement réalisées en matériau métallique car plus apte à fournir une résistance à la rupture appropriée au niveau des ouvertures ou oeillets de fixation qu'un matériau plastique ou composite. Elles sont de préférence réalisées par des opérations de profilage, découpage et poinçonnage. Du point de vue de la rigidification du panneau vitré 10, les armatures de fixation 41 n'ont habituellement qu'un effet négligeable comparativement aux armatures de renfort 51, 52. De ce fait, les armatures de fixation 41 peuvent avoir une section transversale en `L'. Et leur épaisseur de paroi peut être plus faible par rapport à celle des armatures de fixation dans le cas où elles sont toutes réalisées en matériau métallique.

Le matériau polymérique 30 assure de préférence à lui tout seul la solidarisation des armatures de renfort 52 et des armatures de fixation 41 sur le panneau de verre 20. Alternativement ou de manière additionnelle, les armatures de renfort 52 et/ou les armatures de fixation 41 sont fixées par adhésif sur le panneau de verre 20 (avant application du matériau polymérique 30 sur celui-ci). Il peut s'agit d'un ruban adhésif double face ou d'une colle.

Les armatures de renfort 51 et 52 et les armatures de fixation 41 sont de préférence agencées sur la face inférieure 16 du panneau de verre 20.

Les armatures de renfort 51 et 52 ont une forme longitudinale - c'est-à-dire allongée - et s'étendent sensiblement depuis l'armature de fixation 41 du côté gauche du panneau de verre 20 à l'armature de fixation 41 du côté droit du panneau de verre 20, ce qui permet d'assurer efficacement la fonction de rigidification du panneau de verre 20.

Chacune des armatures de renfort 51 et 52 est de préférence conçue sous la forme d'un profilé. La section transversale du profilé est choisie de manière appropriée pour fournir la rigidité souhaitée à l'armature de renfort. Les armatures de renfort 51, 52 peuvent être des profilés de même section ou de section différente : ce dernier cas est illustré par la figure 2.

Quel que soit la section de profilé retenue, le choix de la hauteur h et de la largeur de chaque armature de renfort 51 et 52 est notamment opéré en considération de la rigidification à fournir au panneau de verre 20 et de l'espace disponible dans l'application finale. De ce point de vue, la hauteur h de chacune des armatures de renfort 51 et 52 est de préférence fixée à une valeur donnée choisie de 8 à 30 mm, plus préférentiellement de 8 à 20 mm, s'agissant d'une application à un pavillon de véhicule automobile. La hauteur h s'entend de la dimension du profilé mesurée dans la direction perpendiculaire à la surface principale 16 du panneau de verre 20 après assemblage du panneau vitré 10. La largeur de chacune des armatures de renfort 51 et 52 est de préférence choisie entre 15 et 50 mm.

Il est rappelé que la résistance à la flexion procurée par un profilé dépend essentiellement de la forme de sa section et de la hauteur qu'il présente dans la direction des forces de flexion qui lui sont appliqués, ainsi que de son matériau constitutif.

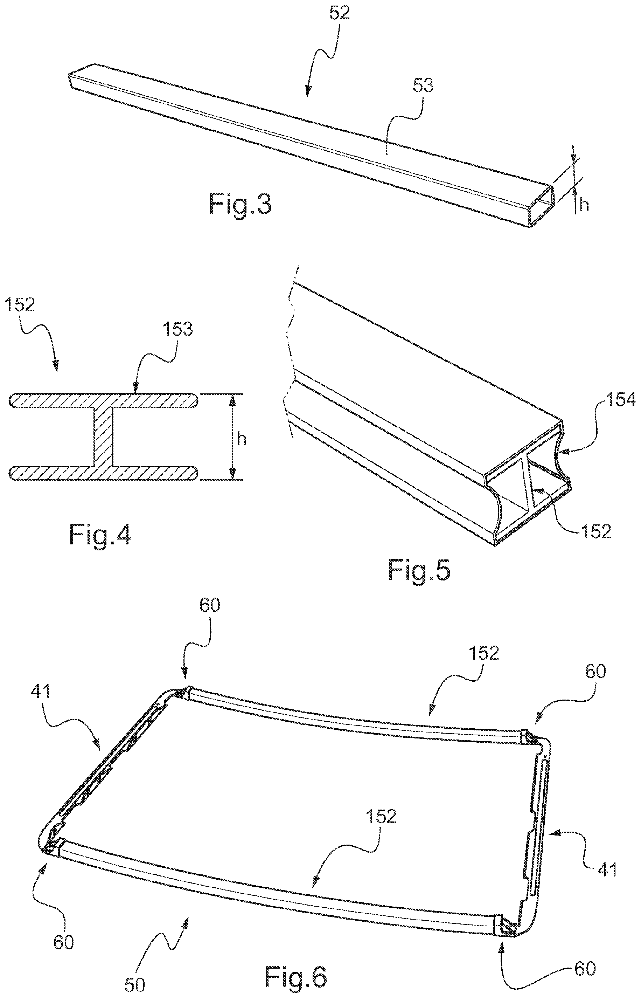

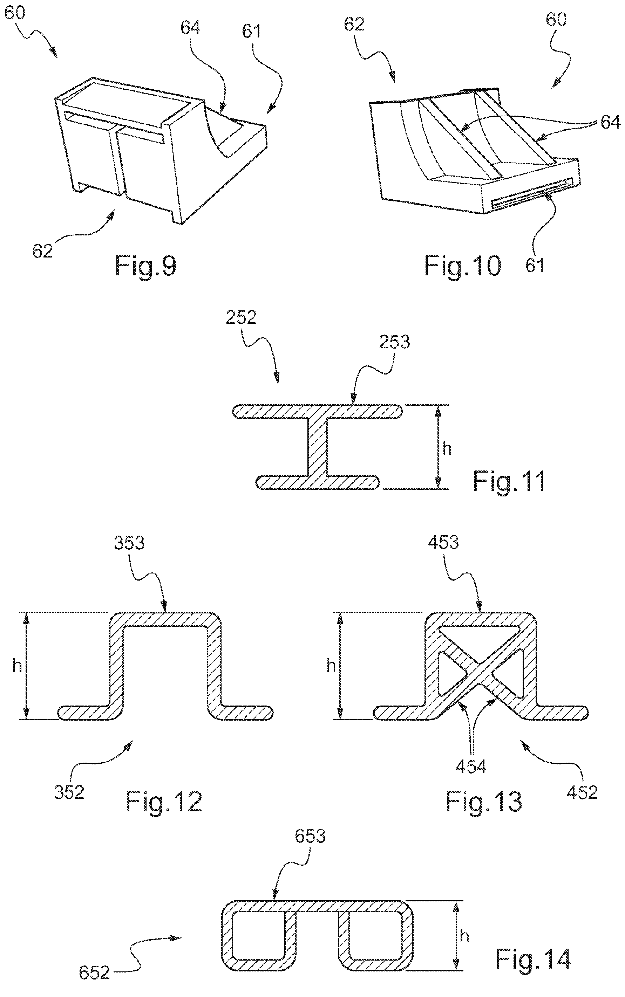

Les armatures de renfort 51, 52 peuvent être réalisées en matériau métallique. La figure 3 illustre le cas classique d'un profilé de section rectangulaire. Cependant, il est plus avantageux de recourir à un profilé en 'I' comme illustré par la figure 4 dans laquelle l'armature de renfort est référencée 152. En effet, à volume de matière identique, une section transversale en 'I' procure une meilleure résistance à la flexion comparativement à d'autres sections de profilé. Dans l'exemple de la figure 4, la section en 'I' est symétrique. En variante, la section en 1 peut être asymétrique, à savoir que l'une des barres horizontales - de préférence celle faisant face au panneau de verre 20 - étant plus longue que l'autre : cf. l'illustration de la figure 11 dans laquelle l'armature de renfort est référencée 252.

S'agissant d'un profilé à section en 'I', l'armature de renfort 152 peut avantageusement être entourée d'une peau 154 ménageant une cavité longitudinale respective de part et d'autre du montant vertical du 'I' entre ses deux barres horizontales : cf. l'illustration de la figure 5. Après encapsulation de l'armature de renfort 152 dans le matériau polymérique périphérique 30, ces deux cavités longitudinales subsistent. De ce fait, elles permettent à la fois d'économiser du matériau polymérique et d'alléger le panneau vitré 10. La peau 154 est de préférence en matériau polymérique. Il peut s'agir d'une gaine thermorétractable par exemple en polyoléfine. Un exemple est celle commercialisée sous la référence HSR 3000 par la société 3M. Le recours à une gaine thermorétractable est en outre avantageux du fait qu'elle permet de se passer de préparation particulière de la surface de l'armature de renfort. En particulier, il est possible de supprimer le traitement de cataphorèse habituellement appliqué à l'armature de renfort dans le cas de l'art antérieur où l'armature de renfort n'est pas pourvue d'une telle peau. Alternativement, la peau 154 peut être réalisée dans un matériau polymérique ayant une adhésion naturelle à la fois avec le matériau polymérique 30 et celui de l'armature de renfort. Par exemple, si le matériau périphérique 30 est du polyuréthane et l'armature de renfort est en matériau métallique, la peau 152 peut être en en polyuréthane.

Alternativement à la peau 154, les deux cavités longitudinales définies de part et d'autre du montant vertical du 'I' entre ses deux barres horizontales peuvent être préalablement remplie d'une matière plastique économique, par exemple une mousse de polyuréthane, afin de procurer les mêmes avantages.

Lorsque l'encombrement disponible dans l'application finale le permet, il est avantageux de choisir une section de profilé apte à être réalisée par profilage (encore dénommée *rollforming*), ce qui permet de réduire les coûts de fabrication de l'armature de renfort. Dans ce cas, pour un même volume de matériau, un profilé pouvant être obtenu par profilage est généralement moins performant qu'un profilé en 'I' du point de la résistance mécanique à la flexion. Néanmoins, il est possible de s'en rapprocher en choisissant de manière judicieuse la section du profilé. De ce point de vue, il est avantageux de recourir à un profilé à section transversale en 'U' dont les montants verticaux sont prolongés par une portion horizontale : cf. l'illustration de la figure 12 dans laquelle l'armature de renfort est référencée 352. Les deux portions horizontales permettent en outre d'assurer avantageusement un ancrage de l'armature de renfort dans le matériau polymérique 30. Toujours de ce même point de vue, il est encore plus avantageux de recourir à un profilé à section transversale comportant deux carrés ou rectangles distants l'une de l'autre, mais réunis entre eux par le prolongement d'un de leur côté respectif : cf. l'illustration de la figure 14 dans laquelle l'armature de renfort est référencée 352.

S'il est souhaitable d'augmenter la rigidité de l'armature de renfort à encombrement identique, le profilé peut être complété par des nervures longitudinales ; Cf. par exemple le cas du profilé à structure en 'U' de la figure 10 complété par deux nervures longitudinales 452 disposées en diagonales et se croisant comme illustré par la figure 13 où l'armature de renfort est référencée 452. Cependant, un tel profilé ne peut être obtenu que par extrusion qui est plus onéreux.

Alternativement, l'une et/ou l'autre des armatures de renfort 51 et 52 sont réalisées en un matériau composite. Celui-ci est choisi de manière appropriée eu égard à l'application finale. S'agissant d'un panneau vitré pour pavillon de véhicule automobile, il est choisi un matériau composite présentant une température de transition vitreuse supérieure ou égale à 70°C. Cette caractéristique permet d'assurer l'intégrité de la fonction de rigidification des armatures de renforts 51 et 52 après installation sur un véhicule automobile, eu égard aux températures maximales auxquelles ce dernier est susceptible d'être exposé en utilisation normale, à savoir environ 60°C, mais pouvant atteindre jusqu'à 120°C dans des tests auxquels les panneaux vitrés sont soumis.

Le fait de réaliser les armatures de renfort 51, 52 en matériau composite permet de réduire leur poids, mais leur emploi suppose généralement une hauteur disponible dans l'application finale qui soit plus importante que dans le cas des armatures en acier du fait du module d'Young des matériaux composites habituellement inférieur.

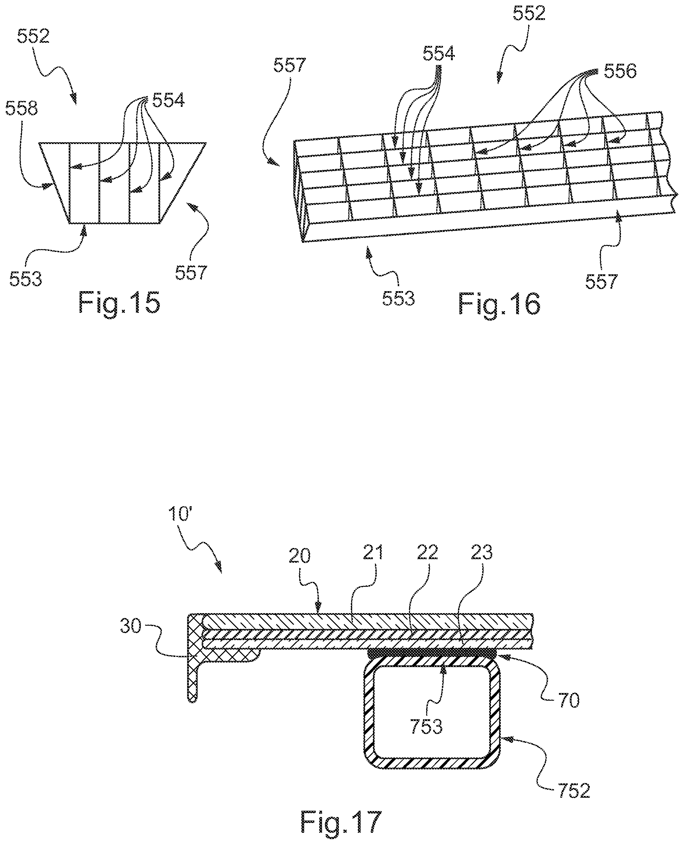

Si le module d'Young du matériau composite choisi est sensiblement inférieur à celui de l'acier, cette différence peut être compensée au moins partiellement en définissant une forme de profilé plus complexe et complétée éventuellement par des nervures de renforcement afin de maintenir la hauteur 'h' de l'armature de renfort à un niveau similaire au cas où l'armature de renfort est réalisée en acier. Les nervures de renforcement peuvent s'étendre longitudinalement et/ou transversalement. Un autre exemple améliorant davantage la résistance mécanique à la flexion, est illustré schématiquement par les figures 15 et 16 montrant respectivement une vue de face et vue en perspective d'une armature de renfort référencée 552. Elle est basée sur un profilé présentant deux parois latérales extérieures 557 et 558 et une paroi de fond 553 s'étendant toutes les trois sur toute la longueur de l'armature de renfort 552. Entre ces trois parois 553, 557 et 558 s'étendent des nervures de renfort longitudinales verticales 554. En outre, des nervures de renfort transversales 556 sont agencées entre ces trois parois 553, 557 et 558 à intervalles de distance réguliers.

A titre d'exemples, le matériau composite peut être :
- un polyphthalamide (PPA) renforcé avec 30% en poids de fibre de verres ou fibres de carbone et présentant une température de transition vitreuse adéquate, notamment ceux de la gamme Grivory^{®} HT2C-3X du groupe EMS-GRIVORY,
- un polyétheréthercétone (PEEK) renforcé avec 30% en poids de fibre de carbone,
- une résine epoxy renforcée avec 30% en poids de fibre de carbone et présentant une température de transition vitreuse adéquate.

Les armatures de renfort ne sont pas placées en contact avec la surface du verre, mais sont séparées d'elle soit par une couche de matériau polymérique - ayant de préférence une épaisseur de 1,5 à 3 mm - venant avec le matériau polymérique périphérique 30 lors de son surmoulage, soit le cas échéant par l'adhésif de fixation des armatures de renfort sur le panneau de verre 20.

Dans le cas où les armatures de renfort sont solidarisées au panneau de verre exclusivement par le matériau polymérique périphérique 30, il est préférable que ce soit une face de celles-ci formant une surface sensiblement pleine et continue qui soit disposée en regard de la surface principale 16 du panneau de verre 20, peu importe que les armatures de renfort soient réalisées en matériau métallique ou en matériau composite : cf. les références 53, 153, 253, 353, 453, 553 et 653 pour les différentes armatures de renfort illustrées dans les figures. Cela permet d'éviter ou du moins limiter l'apparition de contraintes mécaniques préjudiciables sur le panneau de verre 20 dans la zone de l'armature de renfort lors du surmoulage par injection du matériau polymérique périphérique 30 en raison d'un phénomène de retrait du matériau polymérique à l'intérieur de l'armature de renfort si elle présentait un profil creux ouvert vers le panneau de verre 20. Bien entendu, s'il est recouru à une fixation par adhésif, il est préférable aussi qu'une face de l'armature de renfort formant une surface sensiblement pleine et continue soit disposée en regard de la surface principale 16 du panneau de verre 20 car celle-ci permettra une adhésion efficace de l'armature de renfort sur le panneau de verre 20.

Il est bien entendu possible de ne réaliser qu'une seule des deux armatures de renfort en matériau composite comme décrit précédemment et de réaliser l'autre en matériau métallique tel que de l'acier. Similairement, les deux armatures de renfort peuvent avoir une structure identique ou différente, notamment en ce qui concerne la forme de leurs sections transversales ou leurs dimensions.

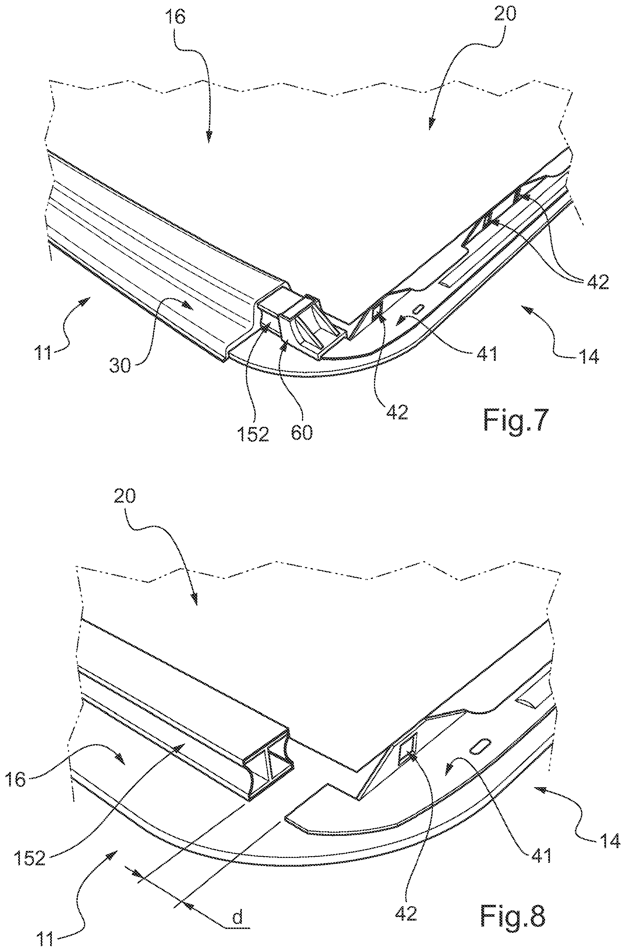

Les armatures de renfort et les armatures de fixation sont assemblées pour former un cadre préalablement à leur solidarisation sur le panneau de verre 20. La figure 6 illustre l'exemple d'un tel cadre 50 obtenu par assemblage de deux armatures de renfort 152 de la figure 5 - pourvues de leur peau 154 - et deux armatures de fixation 41 tandis que la figure 7 montre un agrandissement local d'un coin du cadre après solidarisation sur le panneau de verre 20. Les armatures de renfort 152 et les armatures de fixation 41 sont assemblées entre elles par leurs extrémités longitudinales par le biais d'une pièce intermédiaire 60 respective. Les figures 9 et 10 montrent deux vues en perspective d'une pièce intermédiaire 60. Plus particulièrement, à chaque fois, une extrémité longitudinale d'une armature de renfort 152 et une extrémité longitudinale de l'armature de fixation 41 correspondante sont emboitées dans une pièce intermédiaire 60. Pour cela, la pièce intermédiaire 60 comprend un premier port d'emboitement 62 apte à recevoir l'extrémité longitudinale de l'armature de renfort 152 et un deuxième port d'emboitement 61 apte à recevoir l'extrémité longitudinale de l'armature de fixation 41. Ces deux ports 61, 62 sont de préférence conçus pour que l'emboitement se fasse avec un serrage adapté pour autoriser un enfichage manuel tout en assurant un maintien suffisant pour pouvoir manipuler le cadre sans qu'il se désassemble avant solidarisation au panneau de verre 20. Ainsi, la réalisation du cadre ne requiert pas de mesure additionnelle telle qu'un collage pour le maintenir ensemble et est donc particulièrement simple, rapide et économique à réaliser. Les pièces intermédiaires 60 peuvent être réalisées par moulage de matière plastique, ce qui est particulièrement économique. Il s'agit préférentiellement d'une matière plastique renforcée avec des fibres de verre, par exemple un polyamide 66. La pièce intermédiaire 60 peut comprendre des nervures de rigidification 64. En variante, c'est la pièce intermédiaire 60 qui est emboitée dans une extrémité longitudinale de l'armature de renfort et/ou dans une extrémité longitudinale de l'armature de fixation 41 correspondante au lieu de l'inverse, du moins si la forme de la section transversale des armatures concernées le permet.

Après solidarisation du cadre ainsi formé sur le panneau de verre 20 par adhésif et/ou surmoulage du matériau polymérique périphérique 30, les pièces intermédiaires 60 rigidifient localement le panneau de verre 20 entre les armatures de renfort 152 et les armatures de fixation 41. Elles limitent ainsi les concentrations de contrainte dans les coins du panneau de verre 20 et, de ce fait, elles diminuent sensiblement le risque de casse du panneau de verre 20 dans les zones de coin sous l'effet *windload* ou encore lors des tests du panneau vitré chargé au centre et suspendu par ses coins. Les pièces intermédiaires 60 sont de préférence conçues pour que, après emboîtement en butée, la distance de séparation 'd' entre l'extrémité longitudinale de l'armature de renfort 152 et celle de l'armature de fixation 41 soit inférieure à 30 mm, plus préférentiellement inférieure à 20 mm, plus préférentiellement encore inférieure à 10 mm et plus avantageusement encore inférieure à 5 mm. La distance 'd' est au minimum 0 mm, sauf conception particulière où les extrémités des armatures viendraient se superposées.

Le recours à de pièces intermédiaires 60 pour assembler les armatures de renfort 152 et les armatures de fixation 41 peut présenter plusieurs avantages. Elles permettent d'assembler les armatures de renfort et les armatures de fixation, quel que soit la forme et la structure de leurs extrémités respectives. Elles permettent de boucher les extrémités des armatures de renfort dans le cas où elles sont creuses, ce qui évite qu'elles ne se remplissent avec le matériau polymérique périphérique 30 lors de l'opération de moulage par injection. Elles permettent aussi d'assembler des armatures de renfort et des armatures de fixation réalisés en des matériaux différents, par exemple en matériau composite pour les premières et en matériau métallique pour les secondes qui de ce fait ne pourraient pas être assemblées par soudage.

Alternativement, les armatures de fixation et les armatures de renfort sont emboitées directement l'une dans l'autre, ce qui est possible dans le cas où leurs extrémités sont compatibles pour permettre un tel enfichage.

L'on comprendra que la description de l'assemblage des armatures de renfort 152 et des armatures de fixation 41 sous forme de cadre est applicable de façon générale à des armatures de renfort et des armatures de fixation ayant une structure différente et s'applique notamment à celles référencées 51, 52, 252, 352, 452, 552, 652 sans y être limitée.

La fabrication du panneau vitré 10 peut être réalisée comme suit.

Après avoir assemblé les armatures de renfort et les armatures de fixation sous forme de cadre, celui-ci et le panneau de verre 20 sont positionnés et maintenus dans un moule prévu à cet effet. Ensuite, le matériau polymérique périphérique 30 est surmoulé sur l'ensemble par injection dans le moule. Le moule est conçu pour surmouler complètement les armatures de renfort et les pièces intermédiaires tandis que les armatures de fixation sont surmoulées partiellement pour laisser accessible les parties destinées à la fixation du panneau vitré 10 au mécanisme de translation d'ouvrant du pavillon de véhicule automobile par moulage par injection.

Le fait de réunir les armatures de renfort et les armatures de fixation sous la forme d'un cadre permet de simplifier la mise en place des armatures dans le moule à injection. Il en résulte une réduction du temps de cycle par la mise en place d'un seul élément - à savoir le cadre préassemblé - dans le moule à injection au lieu de quatre, à savoir chacune des armatures de renfort et des armatures de fixation. Par ailleurs, le cadre ainsi formé peut être positionné et maintenu dans le moule à injection exclusivement par le biais des parties non surmoulées des armatures de fixation 41 en recourant par exemple à des systèmes à base de pions de positionnement et/ou d'aimants connus en soi. Il est donc possible de se passer de mesures de positionnement spécifiques aux armatures de renfort de l'art antérieur, à savoir la préfixation par adhésif des armatures de renfort sur le panneau de verre 20 à l'aide d'un gabarit de pose ou bien le recours à des éléments de positionnement des armatures de renfort dans le moule tels que des aimants ou des plots qui ont pour inconvénient d'engendrer des défauts de finition sur le matériau polymérique périphérique 30.

Comme déjà mentionné, le matériau polymérique périphérique 30 peut assurer à lui seul la solidarisation des armatures de renfort et des armatures de fixation sur le panneau de verre 20, ainsi que des pièces intermédiaires 60.

En variante, le cadre peut être fixé sur le panneau de verre 20 par adhésif - tel qu'un ruban adhésif double face ou de la colle - avant d'être placé dans le moule en vue de l'adjonction du matériau polymérique périphérique 30.

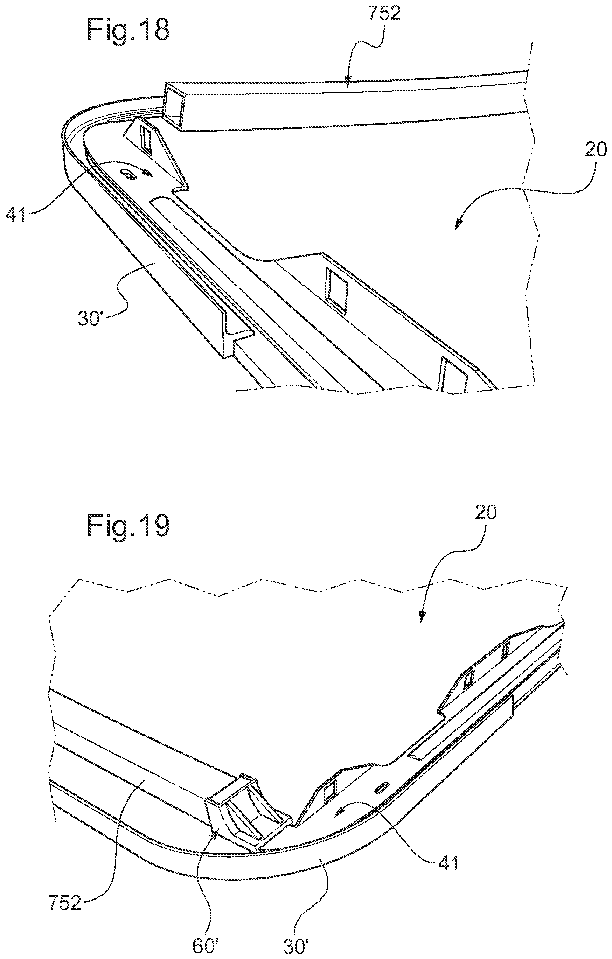

Dans le mode de réalisation décrit, les armatures de renfort 51 et 52 - ou leurs variantes 152, 252, 352, 452, 552, 652 -, les pièces intermédiaires 60 et les armatures de fixation 41 sont surmoulées totalement ou partiellement par le matériau polymérique périphérique 30. Alternativement, le cadre formé par les armatures de renfort, les armatures de fixation et le cas échéant les pièces intermédiaires de liaison entre elles, est fixé sur le panneau de verre 20 de manière adjacente au matériau polymérique périphérique. Cette possibilité est illustrée par les figures 17 à 19. Dans cet exemple, le panneau de verre 20 est de type bifeuilleté comprenant une feuille de verre extérieure 21 et une feuille de verre intérieure 23 assemblées entre elles par une couche polymérique 22, par exemple du polyvinylbutyral (PVB). Comme dans le mode de réalisation précédent, le matériau périphérique polymérique, référencé 30', en l'occurrence du polyuréthane ou similaire - est appliqué sur le pourtour du verre feuilleté 20 par moulage par injection ou tout autre procédé approprié. N'étant pas solidarisé au panneau de verre 20 par le matériau polymérique périphérique 30', le cadre formé par les armatures de renfort, référencées 752, les armatures de fixation 41 et le cas échéant les pièces intermédiaires de liaison entre elles, référencées 60', est fixé sur le panneau de verre 20 par un adhésif 70, par exemple une colle ou un ruban adhésif double face. Il est préférable que chacune des armatures de renfort 752 et des armatures de fixation 41, ainsi que chacune des pièces intermédiaires 60', soit fixée ainsi par adhésif sur le panneau de verre 20.

Bien entendu, la présente invention n'est pas limitée aux exemples et au mode de réalisation décrits et représentés, mais elle est susceptible de nombreuses variantes accessibles à l'homme de l'art sans sortir du cadre de l'invention telle que définie par les revendications.

## Revendications

1. Cadre (50) destiné à être solidarisé à un panneau de verre (20) d'un panneau vitré (10 ; 10') pour un pavillon ouvrant d'un véhicule automobile, comprenant :
- deux armatures longitudinales de renfort (51, 52 ; 152 ; 252 ; 352 ; 452 ; 552 ; 652) pour renforcer le panneau de verre (20) contre les déformations par flexion ; et
- deux armatures longitudinales de fixation (41) pour fixer le panneau vitré (20) dans une structure extérieure prévue pour recevoir le panneau vitré ; lequel cadre étant **caractérisé en ce que**:
- les deux armatures de renfort (51, 52 ; 151, 152) et les deux armatures de fixation (41) sont unies deux à deux par leurs extrémités longitudinales pour former un cadre (50) préassemblé, autrement dit un cadre (50) assemblé préalablement à la solidarisation au panneau de verre (20) pour former un seul élément, et
- au moins une ou chacune des extrémités longitudinales de l'une ou chacune des armatures de renfort est unie à l'extrémité longitudinale correspondante de l'armature de fixation adjacente au moyen d'un assemblage à emboîtement configuré pour pouvoir manipuler ledit cadre (50) préassemblé sans désassemblage avant solidarisation au panneau de verre (20).

2. Cadre selon la revendication 1, dans lequel ledit assemblage est réalisé par emboîtement à ajustement serré.

3. Cadre selon la revendication 2, dans lequel au moins une ou chacune des extrémités longitudinales de l'une ou chacune des armatures de renfort est unie à l'extrémité longitudinale correspondante de l'armature de fixation adjacente exclusivement au moyen d'un assemblage à emboîtement à ajustement serré.

4. Cadre selon l'une quelconque des revendications 1 à 3, dans lequel ledit assemblage à emboîtement comprend un premier emboîtement entre l'extrémité longitudinale de l'armature de renfort et une pièce intermédiaire de liaison (60) et un deuxième emboîtement entre l'extrémité longitudinale de l'armature de fixation et ladite pièce intermédiaire de liaison (60).

5. Cadre selon l'une quelconque des revendications 1 à 3, dans lequel ledit assemblage comprend un emboîtement de l'extrémité longitudinale de l'armature de renfort et un emboîtement de l'extrémité longitudinale de l'armature de fixation dans une même pièce intermédiaire de liaison (60).

6. Cadre selon la revendication 4 ou 5, dans lequel la distance ('d') séparant l'extrémité longitudinale de l'armature de renfort (152) et l'extrémité longitudinale de l'armature de fixation (41) qui sont emboitées dans une même pièce intermédiaire de liaison (60), est inférieure à 30 mm, de préférence inférieure à 20 mm, plus préférentiellement inférieure à 10 mm et plus préférentiellement inférieur à 5 mm.

7. Cadre selon l'une quelconque des revendications 1 à 3, dans lequel ledit assemblage comprend un emboîtement de l'extrémité longitudinale de l'armature de renfort et de l'extrémité longitudinale de l'armature de fixation directement l'une dans l'autre.

8. Cadre selon l'une quelconque des revendications 1 à 7, dans lequel l'extrémité longitudinale de l'armature de fixation (41) présente une partie coudée tournée vers l'extrémité longitudinale adjacente de l'armature de renfort (152), dans lequel la partie coudée sert à l'assemblage par emboitement.

9. Cadre selon l'une quelconque des revendications 1 à 8, dans lequel une ou chacune des armatures de renfort est réalisée en un matériau métallique.

10. Cadre selon l'une quelconque des revendications 1 à 9, dans lequel au moins une des armatures de renfort (452 ; 552) est en matériau composite et est réalisée sous forme d'une pièce profilée renforcée par des nervures longitudinales (454 ; 554) et/ou des nervures transversales (556).

11. Cadre selon l'une quelconque des revendications 1 à 10, dans lequel les armatures de fixation sont réalisées en matériau métallique.

12. Panneau vitré (10 ; 10') pour un pavillon ouvrant d'un véhicule automobile, comprenant :
- un panneau de verre (20) présentant :
∘ une première et une deuxième faces principales (15, 16), et
∘ un pourtour définissant pour le panneau de verre un bord avant (11), un bord arrière (12) et un premier et un deuxième bord latéral (13, 14) s'étendant chacun entre le bord avant (11) et le bord arrière (12) ;
- un matériau polymérique périphérique (30) agencé sur le pourtour du panneau de verre (20) ; et
- un cadre (50) préassemblé, autrement dit un cadre (50) assemblé préalablement à la solidarisation au panneau de verre (20) pour former un seul élément apte à être manipulé sans désassemblage avant ladite solidarisation, selon l'une quelconque des revendications 1 à 11 qui est solidarisé à la première face principale (16) du panneau de verre (20) ;
dans lequel :
- chacune des armatures de renfort du cadre (50) est solidarisée sur la première face principale (16) du panneau de verre (20), la première (51) dans une région le long du bord avant (11) et la deuxième (52) dans une région le long du bord arrière (12) ; et
- chacune des armatures de fixation du cadre (50) est solidarisée sur la première face principale (16) du panneau de verre (20), la première (41) dans une région le long du premier bord latéral (13) et la deuxième dans une région le long du deuxième bord latéral (14).

13. Panneau vitré selon la revendication 12, dans lequel les armatures de renfort (51, 52), et le cas échéant les pièces intermédiaires de liaison, sont complètement encapsulées dans le matériau polymérique périphérique (30) et les armatures de fixation (41, 42) sont partiellement surmoulées par le matériau polymérique périphérique (30).

14. Panneau vitré selon la revendication 12, dans lequel les armatures de renfort (752) et les armatures de fixation (41) sont situées complètement en-dehors du matériau polymérique périphérique (30).

15. Panneau vitré selon l'une quelconque des revendications 12 à 14, dans lequel l'une ou chacune des armatures de renfort comprend une face (53 ; 153 ; 253 ; 353, 453, 553) positionnée en regard du panneau de verre (20) laquelle face forme une surface sensiblement pleine et continue sur toute la longueur de l'armature de renfort.

16. Panneau vitré selon l'une quelconque des revendications 12 à 15, dans lequel au moins l'une des armatures de renfort (152) est une pièce profilée en 'I' et est placée en regard du panneau de verre (20) avec une face définie par l'une des deux barres horizontales du 'I'.

17. Panneau vitré selon la revendication 16, dans lequel l'armature de renfort (152) sous forme de pièce profilée en 'I' est encapsulée dans le matériau polymérique périphérique (30), deux cavités longitudinales creuses (155) ou remplies d'un matériau polymérique différent étant ménagées le long de l'armature de renfort, à savoir une de chaque côté du montant vertical de la section en 'I' entre les deux barres horizontales de la section en 'I'.

18. Panneau vitré selon l'une quelconque des revendications 12 à 17, dans lequel au moins l'une des armatures de renfort (352) est une pièce profilée en 'U' et est placée en regard du panneau de verre (20) avec une face définie par la barre horizontale de la section en 'U' qui relie entre elles les deux montants verticaux de la section en 'U' à une première de leurs extrémités, les montants verticaux du 'U' étant chacun prolongés à leurs deuxièmes extrémités par une portion horizontale orientée vers l'extérieur du 'U'.

19. Panneau vitré selon l'une quelconque des revendications 12 à 18, dans lequel au moins l'une des armatures de renfort est une pièce profilée (652) dont la section transversale est constituée par une première et une deuxième portions chacune de section sensiblement carrée ou rectangulaire et qui sont espacées l'une de l'autre tout en étant réunies entre elles par un prolongement d'un de leur côté respectif, l'armature de renfort étant placée contre le panneau de verre (20) avec la face (653) définie par lesdits côtés respectifs qui sont prolongés.

20. Panneau vitré selon l'une quelconque des revendications 12 à 19, dans lequel le panneau de verre (20) est en verre bifeuilleté et comprend une première feuille de verre (23) ayant une épaisseur de 0,7 à 3,1 mm, plus préférentiellement de 0,7 à 2,1 mm, et une deuxième feuille de verre (21) ayant une épaisseur de 1,4 à 3,1 mm, la première feuille de verre (23) définissant de préférence la première face principale (16) du panneau de verre (20) et la deuxième feuille de verre (21) la deuxième face principale (15) du panneau de verre (20).

21. Panneau vitré selon l'une quelconque des revendications 12 à 20, dans lequel le matériau polymérique périphérique (30) est agencé sur tout le pourtour du panneau de verre (20).

22. Véhicule automobile, comprenant un panneau vitré (10 ; 10') selon l'une quelconque des revendications 12 à 21 lequel est monté dans le pavillon du véhicule en formant un ouvrant, dans lequel les deux armatures de renfort s'étendent transversalement par rapport au véhicule automobile.

23. Procédé de fabrication d'un panneau vitré (10 ; 10') pour un pavillon ouvrant d'un véhicule automobile selon l'une quelconque des revendications 12 à 21, comprenant les étapes de :
a) fourniture ou formation d'un cadre (50) préassemblé, autrement dit un cadre (50) assemblé préalablement à la solidarisation au panneau de verre (20) pour former un seul élément apte à être manipulé sans désassemblage avant ladite solidarisation, selon l'une quelconque des revendications 1 à 11, puis de
b) solidarisation dudit cadre (50) préassemblé à une face principale du panneau de verre (20).

24. Procédé selon la revendication 23, dans lequel, à l'étape b), une solidarisation est réalisée entre la face principale du panneau de verre et chaque armature de renfort et entre la face principale du panneau de verre et chaque armature de fixation.

25. Procédé selon la revendication 24, dans lequel, à l'étape b), une solidarisation est en outre réalisée entre la face principale du panneau de verre et entre chaque pièce de liaison intermédiaire (60).

26. Procédé selon l'une quelconque des revendications 23 à 25, dans lequel l'étape b) comprend :
- b1) la mise en position du cadre (50) préassemblé et du panneau de verre (20) dans un moule, et
- b2) le remplissage du moule avec un matériau polymérique pour adjoindre du matériau polymérique (30) sur le pourtour du panneau de verre (20) qui surmoule partiellement les armatures de fixation et encapsule les armatures de renfort.

27. Procédé selon la revendication 26, dans lequel, à la sous-étape b2), les armatures de renfort et le cas échéant les pièces intermédiaires de liaison sont complètement encapsulées par le matériau polymérique (30).

28. Procédé selon la revendication 26 ou 27, dans lequel la sous-étape b1) comprend la mise en position et le maintien en position du cadre (50) préassemblé dans le moule exclusivement par le biais des armatures de fixation (41).

29. Procédé selon l'une quelconque des revendications 26 à 28, dans lequel la solidarisation des armatures de renfort et des armatures de fixation (41), ainsi que le cas échéant des pièces intermédiaires de liaison (60), sur le panneau de verre (20) est assurée exclusivement par le matériau polymérique (30).

## Patentansprüche

1. Rahmen (50), der dazu bestimmt ist, an einer Glasscheibe (20) einer verglasten Scheibe (10; 10') für ein zu öffnendes Dach eines Kraftfahrzeugs befestigt zu werden, umfassend:
- zwei Längsverstärkungsbewehrungen (51, 52; 152; 252; 352; 452; 552; 652) zum Verstärken der Glasscheibe (20) gegen Verformungen durch Biegen; und
- zwei Längsfixierungsbewehrungen (41) zum Fixieren der Glasscheibe (20) in einer Außenstruktur, die zum Aufnehmen der verglasten Scheibe vorgesehen ist; wobei der Rahmen **dadurch gekennzeichnet ist, dass**:
- die zwei Verstärkungsbewehrungen (51, 52; 151, 152) und die zwei Fixierungsbewehrungen (41) mit ihren Längsenden zum Ausbilden eines vormontierten Rahmens (50), anders ausgedrückt eines Rahmens (50), der vor dem Befestigen an der Glasscheibe (20) zum Ausbilden eines einzelnen Elements montiert wurde, paarweise zusammengefügt werden, und
- mindestens eines oder jedes der Längsenden der einen oder jeder der Verstärkungsbewehrungen mit dem entsprechenden Längsende der benachbarten Fixierungsbewehrung mittels einer Einpassungsmontage zusammengefügt ist, die konfiguriert ist, um den vormontierten Rahmen (50) ohne Demontage vor der Befestigung an der Glasscheibe (20) manipulieren zu können.

2. Rahmen nach Anspruch 1, wobei die Montage durch Einpassung mit Festsitz ausgeführt wird.

3. Rahmen nach Anspruch 2, wobei mindestens eines oder jedes der Längsenden der einen oder jeder der Verstärkungsbewehrungen mit dem entsprechenden Längsende der benachbarten Fixierungsbewehrung ausschließlich mittels einer Einpassungsmontage mit Festsitz zusammengefügt ist.

4. Rahmen nach einem der Ansprüche 1 bis 3, wobei die Einpassungsmontage eine erste Einpassung zwischen dem Längsende der Verstärkungsbewehrung und einem Zwischenverbindungsstück (60) und eine zweite Einpassung zwischen dem Längsende der Fixierungsbewehrung und dem Zwischenverbindungsstück (60) umfasst.

5. Rahmen nach einem der Ansprüche 1 bis 3, wobei die Montage eine Einpassung des Längsendes der Verstärkungsbewehrung und eine Einpassung des Längsendes der Fixierungsbewehrung in einem gleichen Verbindungszwischenstück (60) umfasst.

6. Rahmen nach Anspruch 4 oder 5, wobei der Abstand ("d"), der das Längsende der Verstärkungsbewehrung (152) und das Längsende der Fixierungsbewehrung (41) trennt, die in ein gleiches Zwischenverbindungsstück (60) eingepasst sind, weniger als 30 mm, vorzugsweise weniger als 20 mm, mehr bevorzugt weniger als 10 mm und mehr bevorzugt weniger als 5 mm beträgt.

7. Rahmen nach einem der Ansprüche 1 bis 3, wobei die Montage eine Einpassung des Längsendes der Verstärkungsbewehrung und des Längsendes der Fixierungsbewehrung direkt ineinander umfasst.

8. Rahmen nach einem der Ansprüche 1 bis 7, wobei das Längsende der Fixierungsbewehrung (41) einen abgewinkelten Teil aufweist, der dem benachbarten Längsende der Verstärkungsbewehrung (152) zugewandt ist, wobei der abgewinkelte Teil der Montage durch Einpassung dient.

9. Rahmen nach einem der Ansprüche 1 bis 8, wobei eine oder jede der Verstärkungsbewehrungen aus einem metallischen Material ausgeführt ist.

10. Rahmen nach einem der Ansprüche 1 bis 9, wobei mindestens eine der Verstärkungsbewehrungen (452; 552) aus Verbundmaterial ist und in Form eines Profilstücks ausgeführt ist, das durch Längsrippen (454; 554) und/oder Querrippen (556) verstärkt ist.

11. Rahmen nach einem der Ansprüche 1 bis 10, wobei die Fixierungsbewehrungen aus metallischem Material ausgeführt sind.

12. Verglaste Scheibe (10; 10') für ein zu öffnendes Dach eines Kraftfahrzeugs, umfassend:
- eine Glasscheibe (20), die aufweist:
∘ eine erste und eine zweite Hauptfläche (15, 16), und
∘ einen Umfang, der für die Glasscheibe eine Vorderkante (11), eine Hinterkante (12) und eine erste und eine zweite Seitenkante (13, 14) definiert, die sich jeweils zwischen der Vorderkante (11) und der Hinterkante (12) erstrecken;
- ein peripheres Polymermaterial (30), das auf dem Umfang der Glasscheibe (20) angeordnet ist; und
- einen vormontierten Rahmen (50), anders ausgedrückt einen Rahmen (50), der vor der Befestigung an der Glasscheibe (20) zum Ausbilden eines einzelnen Elements montiert wird, das geeignet ist, um vor der Befestigung ohne Demontage manipuliert zu werden, nach einem der Ansprüche 1 bis 11, der an der ersten Hauptfläche (16) der Glasscheibe (20) befestigt ist;
wobei:
- jede der Verstärkungsbewehrungen des Rahmens (50) an der ersten Hauptfläche (16) der Glasscheibe (20) befestigt ist, die erste (51) in einem Bereich entlang der Vorderkante (11) und die zweite (52) in einem Bereich entlang der Hinterkante (12); und
- jede der Fixierungsbewehrungen des Rahmens (50) an der ersten Hauptfläche (16) der Glasscheibe (20) befestigt ist, die erste (41) in einem Bereich entlang der ersten Seitenkante (13) und die zweite in einem Bereich entlang der zweiten Seitenkante (14).

13. Verglaste Scheibe nach Anspruch 12, wobei die Verstärkungsbewehrungen (51, 52) und gegebenenfalls die Zwischenverbindungsstücke vollständig in dem peripheren Polymermaterial (30) eingekapselt sind und die Fixierungsbewehrungen (41, 42) teilweise mit dem peripheren Polymermaterial (30) umspritzt sind.

14. Verglaste Scheibe nach Anspruch 12, wobei sich die Verstärkungsbewehrungen (752) und die Fixierungsbewehrungen (41) vollständig außerhalb des peripheren Polymermaterials (30) befinden.

15. Verglaste Scheibe nach einem der Ansprüche 12 bis 14, wobei die eine oder jede der Verstärkungsbewehrungen eine Fläche (53; 153; 253; 353, 453, 553) umfasst, die gegenüber der Glasscheibe (20) positioniert ist, wobei die Fläche im Wesentlichen eine feste und durchgehende Oberfläche über die gesamte Länge der Verstärkungsbewehrung ausbildet.

16. Verglaste Scheibe nach einem der Ansprüche 12 bis 15, wobei mindestens die eine der Verstärkungsbewehrungen (152) ein "I"-Profilstück ist und gegenüber der Glasscheibe (20) platziert ist, wobei eine Fläche durch den einen der zwei horizontalen Balken des "I" definiert ist.

17. Verglaste Scheibe nach Anspruch 16, wobei die Verstärkungsbewehrung (152) in Form eines "I"-Profilstücks in dem peripheren Polymermaterial (30) eingekapselt ist, wobei zwei Längshohlräume (155), die hohl sind oder mit einem anderen Polymermaterial gefüllt sind, entlang der Verstärkungsbewehrung vorgesehen sind, und zwar jeweils auf beiden Seiten der vertikalen Strebe des "I"-Abschnitts zwischen den zwei horizontalen Balken des "I"-Abschnitts.

18. Verglaste Scheibe nach einem der Ansprüche 12 bis 17, wobei mindestens die eine der Verstärkungsbewehrungen (352) ein "U"-Profilstück ist und gegenüber der Glasscheibe (20) platziert ist, wobei eine Fläche durch den horizontalen Balken des "U"-Abschnitts definiert ist, der die zwei vertikalen Streben des "U"-Abschnitts an einem ersten ihrer Enden miteinander verbindet, wobei die vertikalen Streben des "U" jeweils an ihren zweiten Enden durch einen horizontalen Anteil verlängert sind, der zu der Außenseite des "U" ausgerichtet ist.

19. Verglaste Scheibe nach einem der Ansprüche 12 bis 18, wobei mindestens die eine der Verstärkungsbewehrungen ein Profilstück (652) ist, dessen Querschnitt aus einem ersten und einem zweiten Anteil mit jeweils im Wesentlichen quadratischem oder rechteckigem Querschnitt besteht und die voneinander beabstandet sind, während sie durch eine Verlängerung einer ihrer jeweiligen Seiten miteinander verbunden sind, wobei die Verstärkungsbewehrung gegen die Glasscheibe (20) platziert ist, wobei die Fläche (653) durch die jeweiligen Seiten definiert ist, die verlängert sind.

20. Verglaste Scheibe nach einem der Ansprüche 12 bis 19, wobei die Glasscheibe (20) aus zweischichtigem Glas ist und eine erste Glasscheibe (23), die eine Dicke von 0,7 bis 3,1 mm, mehr bevorzugt von 0,7 bis 2,1 mm besitzt, und eine zweite Glasscheibe (21) umfasst, die eine Dicke von 1,4 bis 3,1 mm besitzt, wobei die erste Glasscheibe (23) vorzugsweise die erste Hauptfläche (16) der Glasscheibe (20) und die zweite Glasscheibe (21) die zweite Hauptfläche (15) der Glasscheibe (20) definiert.

21. Verglaste Scheibe nach einem der Ansprüche 12 bis 20, wobei das periphere Polymermaterial (30) auf dem gesamten Umfang der Glasscheibe (20) angeordnet ist.

22. Kraftfahrzeug, umfassend eine Glasscheibe (10; 10') nach einem der Ansprüche 12 bis 21, die in dem Dach des Fahrzeugs angebracht ist, in dem sie eine Öffnung ausbildet, in der sich die zwei Verstärkungsbewehrungen quer relativ zu dem Kraftfahrzeug erstrecken.

23. Verfahren zum Anfertigen einer Glasscheibe (10; 10') für ein zu öffnendes Dach eines Kraftfahrzeugs nach einem der Ansprüche 12 bis 21, umfassend die Schritte:
a) Bereitstellen oder Ausbilden eines vormontierten Rahmens (50), anders ausgedrückt eines Rahmens (50), der vor der Befestigung an der Glasscheibe (20) zum Ausbilden eines einzelnen Elements montiert wird, das geeignet ist, um vor der Befestigung ohne Demontage manipuliert zu werden, nach einem der Ansprüche 1 bis 11, dann
b) Befestigen des vormontierten Rahmens (50) an einer Hauptfläche der Glasscheibe (20).

24. Verfahren nach Anspruch 23, wobei in Schritt b) eine Befestigung zwischen der Hauptfläche der Glasscheibe und jeder Verstärkungsbewehrung und zwischen der Hauptfläche der Glasscheibe und jeder Fixierungsbewehrung ausgeführt wird.

25. Verfahren nach Anspruch 24, wobei im Schritt b) eine Befestigung ferner zwischen der Hauptfläche der Glasscheibe und zwischen jedem Zwischenverbindungsstück (60) ausgeführt wird.

26. Verfahren nach einem der Ansprüche 23 bis 25, wobei Schritt b) umfasst:
- b1) Positionieren des vormontierten Rahmens (50) und der Glasscheibe (20) in einer Form, und
- b2) Füllen der Form mit einem Polymermaterial zum Anfügen des Polymermaterials (30) auf dem Umfang der Glasscheibe (20), das die Fixierungsbewehrungen teilweise umspritzt und die Verstärkungsbewehrungen einkapselt.

27. Verfahren nach Anspruch 26, wobei in dem Teilschritt b2) die Verstärkungsbewehrungen und gegebenenfalls die Zwischenverbindungsstück vollständig durch das Polymermaterial (30) eingekapselt werden.

28. Verfahren nach Anspruch 26 oder 27, wobei der Teilschritt b1) das Positionieren und das Halten des vormontierten Rahmens (50) in der Form ausschließlich dank der Fixierungsbewehrungen (41) umfasst.

29. Verfahren nach einem der Ansprüche 26 bis 28, wobei die Befestigung der Verstärkungsbewehrungen und der Fixierungsbewehrungen (41) sowie gegebenenfalls der Zwischenverbindungsstücke (60) auf der Glasscheibe (20) ausschließlich durch das Polymermaterial (30) gewährleistet ist.

## Claims

1. A frame (50) designed to be rendered integral with a glass panel (20) of a glazed panel (10; 10') for a motor vehicle opening roof, comprising:
- two longitudinal reinforcement armatures (51, 52; 152; 252; 352; 452; 552; 652) in order to reinforce the glass panel (20) against deformations by flexure; and
- two longitudinal securing armatures (41) in order to secure the glazed panel (20) in an outer structure designed to receive the glazed panel;
said frame being **characterized in that** :
- the two reinforcement armatures (51, 52; 151, 152) and the two securing armatures (41) are joined in pairs by means of their longitudinal ends, in order to form a pre-assembled frame (50), in other words a frame (50) assembled before to be rendered integral with the glass panel (20) to form a single element; and
- at least one end or each of the longitudinal ends of one or each of the reinforcement armatures is joined to the corresponding longitudinal end of the adjacent securing armature by means of a nesting assembly configured to be able to handle the frame (50) without disassembling it, before rendering it integral with the glass panel (20).

2. The frame as claimed in claim 1, wherein said assembly is produced by nesting with clamped adjustment.

3. The frame as claimed in claim 2, wherein at least one or each of the longitudinal ends of one or each of the reinforcement armatures is joined to the corresponding longitudinal end of the adjacent securing armature exclusively by means of an assembly by nesting with clamped adjustment.

4. The frame as claimed in any one of claims 1 to 3, wherein said assembly by nesting comprises a first nesting between the longitudinal end of the reinforcement armature and an intermediate connection part (60), and a second nesting between the longitudinal end of the securing armature and said intermediate connection part (60).

5. The frame as claimed in any one of claims 1 to 3, wherein said assembly comprises nesting of the longitudinal end of the reinforcement armature, and nesting of the longitudinal end of the securing armature, in a single intermediate connection part (60).

6. The frame as claimed in claim 4 or 5, wherein the distance (`d') which separates the longitudinal end of the reinforcement armature (152) and the longitudinal end of the securing armature (41) which are nested in a single intermediate connection part (60) is less than 30 mm, preferably less than 20 mm, more preferably less than 10 mm, and more preferably less than 5 mm.

7. The frame as claimed in any one of claims 1 to 3, wherein said assembly comprises nesting of the longitudinal end of the reinforcement armature and of the longitudinal end of the securing armature directly in one another.

8. The frame as claimed in any one of claims 1 to 7, wherein the longitudinal end of the securing armature (41) has a bent part facing towards the adjacent longitudinal end of the reinforcement armature (152), wherein the bent part is used for the assembly by nesting.

9. The frame as claimed in any one of claims 1 to 8, wherein one or each of the reinforcement armature(s) is made of a metal material.

10. The frame as claimed in any one of claims 1 to 9, wherein at least one of the reinforcement armatures (452; 552) is made of composite material, and is produced in the form of a profiled part reinforced by longitudinal ribs (454; 554) and/or transverse ribs (556).

11. The frame as claimed in any one of claims 1 to 10, wherein the securing armatures are made of metal material.

12. A glazed panel (10; 10') for a motor vehicle opening roof comprising:
- a glass panel (20) with:
• a first and a second main faces (15, 16); and
• a periphery, which defines for the glass panel a front edge (11), a rear edge (12), and a first and a second lateral edge (13, 14) which each extend between the front edge (11) and the rear edge (12);
- a peripheral polymer material (30) arranged on the periphery of the glass panel (20); and
- a a pre-assembled frame (50), in other words a frame (50) assembled before to be rendered integral with the glass panel (20) to form a single element to be able to handle the frame (50) without disassembling it, before rendering it integral with the glass panel (20) as claimed in any one of claims 1 to 11, which is rendered integral with the first main face (16) of the glass panel (20);
wherein:
- each of the reinforcement armatures of the frame (50) is rendered integral on the first main face (16) of the glass panel (20), the first (51) in a region along the front edge (11) and the second (52) in a region along the rear edge (12); and
- each of the securing armatures of the frame (50) is rendered integral on the first main face (16) of the glass panel (20), the first (41) in a region along the first lateral edge (13) and the second in a region along the second lateral edge (14).

13. The glazed panel as claimed in claim 12, wherein the reinforcement armatures (51, 52), and if applicable the intermediate connection parts, are completely encapsulated in the peripheral polymer material (30) and the securing armatures (41, 42) are partly overmolded by the peripheral polymer material (30).

14. The glazed panel as claimed in claim 12, wherein the reinforcement armatures (752) and the securing armatures (41) are situated completely outside the peripheral polymer material (30).

15. The glazed panel as claimed in any one of claims 12 to 14, wherein one or each of the reinforcement armatures comprises a face (53; 153; 253; 353; 453, 553) positioned facing the glass panel (20), which face forms a substantially continuous solid surface along the entire length of the reinforcement armature.

16. The glazed panel as claimed in any one of claims 12 to 15, wherein at least one of the reinforcement armatures (152) is a part profiled in the form of an "I", and is placed facing the glass panel (20) with a face defined by one of the two horizontal bars of the "I".

17. The glazed panel as claimed in claim 16, wherein the reinforcement armature (152) in the form of a part profiled in the form of an "I" is encapsulated in the peripheral polymer material (30), two longitudinal cavities (155) which are hollow or filled with a different polymer material being arranged along the reinforcement armature, i.e. one on each side of the vertical upright of the cross-section in the form of an "I" between the two horizontal bars of the cross-section in the form of an "I".

18. The glazed panel as claimed in any one of claims 12 to 17, wherein at least one of the reinforcement armatures (352) is a part profiled in the form of a "U", and is placed facing the glass panel (20) with a face defined by the horizontal bar of the cross-section in the form of a "U" which connects to one another the two vertical uprights of the cross-section in the form of a "U" at a first one of their ends, the vertical uprights of the "U" each being extended at their second ends by a horizontal portion oriented towards the outside of the "U".

19. The glazed panel as claimed in any one of claims 12 to 18, wherein at least one of the reinforcement armatures is a profiled part (652), the transverse cross-section of which is constituted by a first and second portion each with a substantially square or rectangular cross-section, and spaced from one another whilst being joined to one another by an extension of one of their respective sides, the reinforcement armature being placed against the glass panel (20) with the face (653) defined by said respective sides which are extended.

20. The glazed panel as claimed in any one of claims 12 to 19, wherein the glass panel (20) is made of bi-laminated glass, and comprises a first sheet of glass (23) with a thickness of 0.7 to 3.1 mm, more preferably 0.7 to 2.1 mm, and a second sheet of glass (21) with a thickness of 1.4 to 3.1 mm, with the first sheet of glass (23) preferably defining the first main face (16) of the glass panel (20), and the second sheet of glass (21) defining the second main face (15) of the glass panel (20).

21. The glazed panel as claimed in any one of claims 12 to 19, wherein the peripheral polymer material (30) is arranged around the entire periphery of the glass panel (20).

22. A motor vehicle comprising a glazed panel (20) as claimed in any one of claims 12 to 21, which is fitted in the top of the vehicle, preferably forming an opener, wherein the two reinforcement armatures extend transversely relative to the motor vehicle.

23. A method for production of a glazed panel as claimed in any one of claims 12 to 21, comprising the steps of:
a) supply or formation of a frame (50) as claimed in any one of claims 1 to 11, then
b) rendering the frame integral with a main face of the glass panel (20).

24. The method as claimed in claim 23, wherein, in the step b), rendering integral is carried out between the main face of the glass panel and each reinforcement armature, and between the main face of the glass panel and each securing armature.

25. The method as claimed in claim 24, wherein, in the step b), rendering integral is also carried out between the main face of the glass panel, and between each intermediate connection part (60).

26. The method as claimed in any one of claims 23 to 25, wherein the step b) comprises:
- b1) putting the frame (50) and the glass panel (20) into position in a mold; and
- b2) filling the mold with a polymer material in order to add polymer material (30) to the periphery of the glass panel (20) which partly overmolds the securing armatures and encapsulates the reinforcement armatures.

27. The method as claimed in claim 26, wherein, in the sub-step b2), the reinforcement armatures, and if applicable the intermediate connection parts, are completely encapsulated by the polymer material (30).

28. The method as claimed in claim 26 or 27, wherein the sub-step b1) comprises putting into position and retention in position of the frame (50) in the mold exclusively by means of the securing armatures (41).

29. The method as claimed in any one of claims 26 to 28, wherein rendering integral of the reinforcement armatures and of the securing armatures (41), as well as, if applicable, the intermediate connection parts (60), on the glass panel (20), is ensured exclusively by the polymer material (30).
